Europäisches Patentamt

European Patent Office

Office européen des brevets

(19)

(11) Numéro de publication: **0 159 210 B1**

(12) **FASCICULE DE BREVET EUROPEEN**

(45) Date de publication du fascicule du brevet:
**24.05.89**

(51) Int. Cl.⁴: **G 01 B 11/02,** G 01 B 11/24, G 01 B 11/14

(21) Numéro de dépôt: **85400334.0**

(22) Date de dépôt: **22.02.85**

(54) **Dispositif optique de mesure de proximité de surface et son application au relevé du profil d'une surface.**

(30) Priorité: **29.02.84 FR 8403168**

(43) Date de publication de la demande:
**23.10.85 Bulletin 85/43**

(45) Mention de la délivrance du brevet:
**24.05.89 Bulletin 89/21**

(84) Etats contractants désignés:
**CH DE GB IT LI SE**

(56) Documents cités:
**DE-A- 3 110 073**
**US-A- 3 719 421**
**US-A- 3 885 872**
**US-A- 3 986 774**
**US-A- 4 088 408**
**US-A- 4 298 286**
**US-A- 4 355 904**

(73) Titulaire: **COMMISSARIAT A L'ENERGIE ATOMIQUE, 31/33, rue de la Fédération, F-75015 Paris (FR)**

(72) Inventeur: **Lerat, Bernard, 4 Bis, rue Pierre Lescot, F-91430 Igny (FR)**

(74) Mandataire: **Mongrédien, André et al, c/o BREVATOME 25, rue de Ponthieu, F-75008 Paris (FR)**

EP 0 159 210 B1

## Description

La présente invention concerne un dispositif optique destiné à mesurer la proximité d'une surface. L'invention concerne également l'application d'un tel dispositif au relevé du profil d'une surface.

De tels dispositifs sont utilisés dans de nombreux domaines et notamment pour la commande de robots chargés d'accomplir automatiquement certaines tâches. Ils permettent de connaître instantanément la position relative d'un organe par rapport à une surface et, le cas échéant, le profil de cette dernière. Les déplacements du robot ainsi que la fonction même remplie par ce dernier peuvent donc être adaptés automatiquement à tout instant à des conditions de travail qui peuvent évoluer dans le temps.

Lorsqu'ils sont utilisés pour relever le profil d'une surface, de tels dispositifs optiques trouvent une application avantageuse dans les robots de soudage adaptatifs ainsi que dans le soudage assisté par ordinateur. En effet, ces deux techniques nécessitent la connaissance de la position spatiale et de certains paramètres géométriques du joint de soudure. Cette connaissance s'obtient grâce à des dispositifs de mesure de proximité et à des dispositifs de relevé de profil.

Les dispositifs optiques de mesure de proximité de surface existant à ce jour sont principalement de deux types.

Une première famille de capteurs optiques connus utilise le principe dit «de la triangulation». Selon ce principe, on envoie un faisceau lumineux obliquement vers la surface à détecter, pour former une tache lumineuse sur celle-ci. On focalise le faisceau réfléchi et/ou diffusé par la surface, afin de former l'image de la tache sur un détecteur de localisation. Ce détecteur peut notamment être constitué par une caméra à dispositif à transfert de charge. Un tel capteur optique est commercialisé par la firme suédoise SELCOM sous la dénomination OPTOCATOR.

Comme tous les dispositifs optiques, ce dispositif ne nécessite aucun contact matériel avec la surface à détecter. De plus, sa distance de fonctionnement par rapport à la surface (appelée «hauteur de vol») est satisfaisante. Enfin, ce capteur optique est immunisé vis-à-vis des parasites électriques, qui sont très perturbants dans certaines applications et notamment dans le cas du soudage.

Toutefois, les capteurs à triangulation présentent aussi l'inconvénient d'utiliser un détecteur de localisation complexe et coûteux. De plus, leur bande passante est relativement limitée.

Il existe aussi actuellement des capteurs optiques à infrarouge dans lesquels le rayonnement infrarouge émis par une diode électroluminescente est renvoyé par la surface sur un détecteur tel qu'une photodiode ou un phototransistor. Le détecteur délivre un signal analogique représentatif du flux lumineux renvoyé par la cible et, en particulier, de la distance entre le capteur et la cible.

Ces capteurs à infrarouge sont plus simples et moins coûteux que les capteurs à triangulation. De plus, leur bande passante est plus large.

Toutefois, les réponses de ces capteurs varient avec le coefficient de réflexion de la surface et avec l'angle d'incidence du faisceau incident sur cette surface. Il en résulte qu'ils sont difficilement utilisables lorsque l'état de surface de la pièce et/ou son orientation par rapport au capteur varient, ce qui est généralement le cas en robotique.

Par ailleurs, le document US-A-4 088 408 décrit un dispositif optique permettant de mesurer la proximité d'une surface et d'en relever le profil. Ce dispositif comprend une source lumineuse dont l'image est focalisée sur le point le plus haut de la surface par une lentille, et deux détecteurs équipés de diaphragmes de tailles différentes et sur lesquels est focalisé le faisceau renvoyé par ce point de la surface. On effectue un balayage de la surface et on mesure après étalonnage le rapport des signaux émis par les détecteurs, qui est représentatif de la profondeur de la surface.

Enfin, le document US-A-3 885 872 décrit un dispositif optique de mesure de proximité de surface, qui comprend une source lumineuse et deux transducteurs photosensibles tels que des photodiodes, dont les caractéristiques de sortie sont différentes. En soustrayant les signaux délivrés par les photodiodes, on obtient un signal digital représentant le décalage de la surface par rapport à une distance de référence pour laquelle ces signaux sont identiques.

La présente invention a précisément pour objet un dispositif optique de mesure de proximité de surface s'apparentant au second type de capteurs optiques existants qui viennent d'être décrits, tout en permettant, contrairement à ces derniers, de réaliser une mesure de la distance séparant le capteur de la surface en vis-à-vis, indépendamment du coefficient de réflexion de cette surface et de l'angle d'incidence. Comme tous les capteurs opto-électroniques, le capteur selon l'invention présente de plus l'avantage, par rapport aux capteurs optiques à triangulation, de remplacer un détecteur complexe et coûteux par un détecteur optique de bas de gamme, et aussi de gagner en bande passante.

A cet effet, et conformément à l'invention, il est proposé un dispositif optique de mesure de proximité de surface, comprenant un émetteur de rayonnement formant une tache lumineuse sur ladite surface et un récepteur sensible au flux lumineux renvoyé par cette dernière, au travers de moyens de focalisation, le récepteur comprenant deux détecteurs et des moyens pour déterminer la valeur du rapport entre les flux lumineux mesurés par chacun des détecteurs, cette valeur étant représentative de la distance séparant le dispositif de la surface, caractérisé en ce que les deux détecteurs sont associés à deux moyens de focalisation présentant des focales différentes.

On obtient ainsi, conformément à l'invention, un signal représentatif de la distance et qui est indépendant à la fois du coefficient de réflexion de la surface et de l'angle d'incidence du faisceau émis par l'émetteur.

Dans la définition de l'invention qui vient d'être donnée comme dans la suite de la description, l'expression «flux lumineux renvoyé par la surface» désigne indifféremment le faisceau réfléchi par la surface et/ou le faisceau diffusé par la surface.

Selon un premier aspect de l'invention, le faisceau incident est un faisceau parallèle, de telle sorte que les dimensions de la tache sont indépendantes de la distance séparant l'émetteur de la surface. Si l'on suppose en outre que les axes optiques du faisceau incident et du faisceau renvoyé sur le récepteur par la surface sont confondus, les variations du flux lumineux mesurées par les détecteurs découlent alors directement des variations de la distance séparant la surface des moyens de focalisation associés à ces derniers.

Selon un deuxième aspect de l'invention, le faisceau incident est un faisceau convergent. Les dimensions de la tache sur la surface vont alors varier lorsque la distance séparant l'émetteur de la surface varie. Si l'on se place comme précédemment dans l'hypothèse où les axes optiques du faisceau incident et du faisceau renvoyé par la surface sont confondus, ce phénomène se cumule avec le précédent. Le flux lumineux mesuré par les détecteurs résulte alors de la variation simultanée des distances entre la surface et les moyens de focalisation associés à l'émetteur, d'une part, au détecteur, d'autre part.

Selon un troisième aspect de l'invention, qui se combine avec l'un ou l'autre des deux aspects évoqués précédemment, le faisceau émetteur est angulairement décalé par rapport au faisceau renvoyé par la surface. En plus des phénomènes évoqués précédemment, un accroissement de la distance entre les détecteurs et la surface a alors pour effet un déplacement latéral du faisceau renvoyé par cette dernière par rapport aux détecteurs, faisceau dont une partie variable est reçue sur ces détecteurs de surface limitée. Cet effet se cumule avec les autres phénomènes déjà mentionnés; la variation du flux lumineux reçu par les détecteurs résultant de la variation de la distance surface-détecteurs peut être encore plus rapide.

De préférence, le dispositif de mesure selon l'invention comprend de plus des moyens d'asservissement de l'intensité du rayonnement émis par l'émetteur en fonction du flux lumineux mesuré par l'un des détecteurs, afin que ce flux reste constant. De plus, la détermination de la valeur du rapport entre les flux lumineux mesurés par chacun des détecteurs est facilitée.

Le bruit résultant du rayonnement ambiant peut être éliminé en équipant le dispositif d'au moins un filtre associé aux détecteurs et centré sur la longueur d'onde d'émission. De plus, des moyens peuvent être prévus pour moduler à une fréquence donnée le rayonnement émis par l'émetteur et pour démoduler à ladite fréquence les signaux délivrés par chacun des détecteurs.

Selon un premier mode de réalisation de l'invention, le dispositif comprend de plus une lame semi-transparente placée entre ladite surface et l'un des détecteurs pour dévier une partie du flux lumineux vers l'autre détecteur.

Selon un autre mode de réalisation de l'invention, les deux détecteurs sont disposés de part et d'autre de l'émetteur, les axes optiques de l'émetteur et des détecteurs étant situés dans un même plan et la normale à la surface étant située dans un plan passant par l'axe optique de l'émetteur et perpendiculaire au plan défini par les axes optiques de l'émetteur et des détecteurs.

Selon une application particulièrement intéressante de l'invention, le dispositif de mesure de proximité tel qu'il vient d'être défini peut être associé à des moyens pour faire balayer le profil d'une surface par ce dispositif, de façon à réaliser un dispositif optique de relevé de ce profil.

On décrira maintenant, à titre d'exemples non limitatifs, différents modes de réalisation de l'invention en se référant aux dessins annexés, dans lesquels:

– la figure 1 représente schématiquement un premier mode de réalisation du dispositif de mesure de distance selon l'invention,

– la figure 2 représente schématiquement sous forme de tableau la position du faisceau renvoyé par la surface par rapport à chacun des détecteurs du dispositif de la figure 1 lorsqu'on fait varier la distance entre ce dispositif et la surface,

– la figure 3 représente la courbe de réponse de chacun des détecteurs du dispositif de la figure 1, en fonction de la distance d séparant ce dispositif de la surface, pour différentes valeurs de l'angle d'incidence $\beta$ du faisceau incident par rapport à la surface,

– la figure 4 représente les variations du quotient q des signaux délivrés par chacun des détecteurs, en fonction de la distance d entre le dispositif et la surface,

– la figure 5 représente de façon schématique un autre mode de réalisation du dispositif de mesure de proximité selon l'invention, dans lequel les deux détecteurs sont placés de part et d'autre de l'émetteur, et

– les figures 6a et 6b représentent de façon schématique, respectivement en vue de face et en vue de côté, l'application d'un tel dispositif de mesure de proximité au contrôle du profil des surfaces de deux pièces à souder, au cours du soudage automatique de ces pièces.

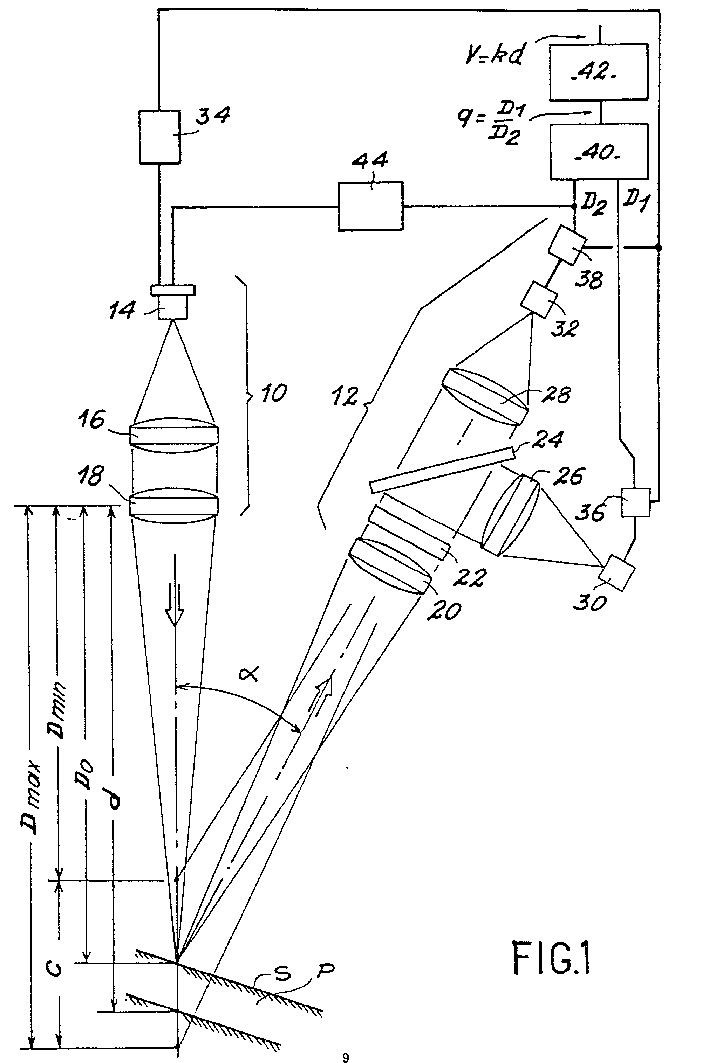

Comme l'illustre la figure 1, le dispositif selon l'invention comprend un ensemble émetteur 10 et un ensemble récepteur 12, le tout positionné dans un boîtier (non représenté).

L'ensemble émetteur 10 comprend une diode électroluminescente LED ou une diode laser 14 et deux lentilles de focalisation 16 et 18. Ces deux lentilles permettent de focaliser le rayonnement émis par la diode laser à une distance $D_0$ de la lentille 18. A titre d'illustration non limitative, on notera que le faisceau convergent focalisé par les lentilles 16 et 18 peut définir une distance de focalisation $D_0$ d'environ 150 mm pour un angle de convergence d'environ 10°.

L'émetteur 14 est choisi selon l'application concernée. Il émet par exemple un rayonnement infrarouge compris entre 830 et 850 nm.

Dans le mode de réalisation représenté sur la figure 1, l'ensemble récepteur 12 comprend une lentille 20, un filtre interférentiel 22, une lame semi-transparente 24, deux lentilles 26 et 28 et deux détecteurs 30 et 32. Les détecteurs 30 et 32 sont des détecteurs photovoltaïques délivrant un signal de tension proportionnel au flux lumineux qui les touche.

Pour des raisons qui apparaîtront dans la suite de la description, les lentilles 26 et 28 associées respectivement aux détecteurs 30 et 32 ont des focales différentes. Au contraire, les focales des lentilles 18 et 20 peuvent être identiques.

Les axes optiques définis par l'ensemble émetteur 10 et par l'ensemble récepteur 12 forment entre eux un angle $\alpha$ dont on verra ultérieurement l'influence sur la valeur du flux lumineux reçu par chacun des détecteurs.

Dans le mode de réalisation perfectionné représenté sur la figure 1, l'amplitude du faisceau lumineux délivré par l'émetteur 14 est modulé par un circuit 34 à une fréquence constante donnée, par exemple de 40 kHz. A l'inverse, les signaux électriques délivrés par chacun des détecteurs 30 et 32 sont démodulés dans des circuits appropriés désignés respectivement par les références 36 et 38. La fréquence de démodulation des signaux délivrés par les détecteurs est la même que la fréquence de modulation du faisceau incident. Elle est fournie par le modulateur 34. Dans l'exemple chiffré donné précédemment, cette fréquence est de 40 kHz.

Parallèlement, le filtre interférentiel 22 est centré sur la longueur d'onde du rayonnement émis par l'émetteur 14.

Ces deux caractéristiques combinées permettent de s'affranchir des bruits de fond résultant du rayonnement ambiant. Il est à noter que l'immunité du dispositif de mesure de proximité selon l'invention au rayonnement ambiant est particulièrement importante dans l'application d'un tel dispositif au relevé du profil d'une surface dans un robot de soudage.

Conformément à une caractéristique essentielle de l'invention, les signaux $D_1$ et $D_2$ délivrés par chacun des capteurs 30 et 32 et démodulés par les circuits 36 et 38 sont injectés dans un circuit de traitement 40 qui détermine le rapport q entre ces signaux. Comme on le verra ultérieurement en analysant le fonctionnement du dispositif selon l'invention, ce rapport q est fonction uniquement de la distance d qui sépare un point de référence du dispositif, tel que la lentille 18, de la surface S de la pièce P.

Afin de faciliter son exploitation ultérieure, le signal q est linéarisé dans un circuit de linéarisa- tion classique 42 délivrant un signal de sortie V tel que V = k.d, k étant une constante. Ce signal V, qui varie de façon linéaire avec la distance d, peut être utilisé directement ou servir à commander un asservissement selon l'application envisagée.

De préférence, et comme l'illustre également la figure 1, un circuit d'asservissement 44 est prévu entre l'émetteur 14 et l'un des détecteurs. Dans l'exemple représenté, ce détecteur est le détecteur 32. Le circuit 44 permet d'asservir l'amplitude du signal de commande de l'émetteur 14, de telle manière que le flux reçu par le détecteur 32 reste constant quelles que soient les conditions de fonctionnement. De plus, le circuit de traitement 40 peut être simplifié, puisque le diviseur de la divi- sion $q = D_1/D_2$ demeure constant.

Tous les circuits électroniques 34 à 44 sont des circuits classiques, bien connus des spécialistes, de sorte qu'aucune description détaillée n'en sera faite.

On expliquera maintenant le fonctionnement du dispositif de mesure de proximité de surface selon l'invention en se référant aux figures 1 à 4.

L'orientation de la pièce P étant quelconque l'ensemble émetteur 10 projette une tache lumineuse sur la surface S de cette pièce. Le faisceau incident se réfléchit sur cette surface, sur laquelle il se produit généralement de plus une diffusion du rayonnement projeté.

Une partie du faisceau renvoyé par la surface S de la pièce P atteint les détecteurs 30 et 32 au travers des différents composants optiques de l'ensemble récepteur 12. Etant donné que les focales des lentilles 26 et 28 sont différentes, les taches lumineuses dans le plan des détecteurs sont de diamètre différent, donc les détecteurs reçoivent des flux lumineux différents.

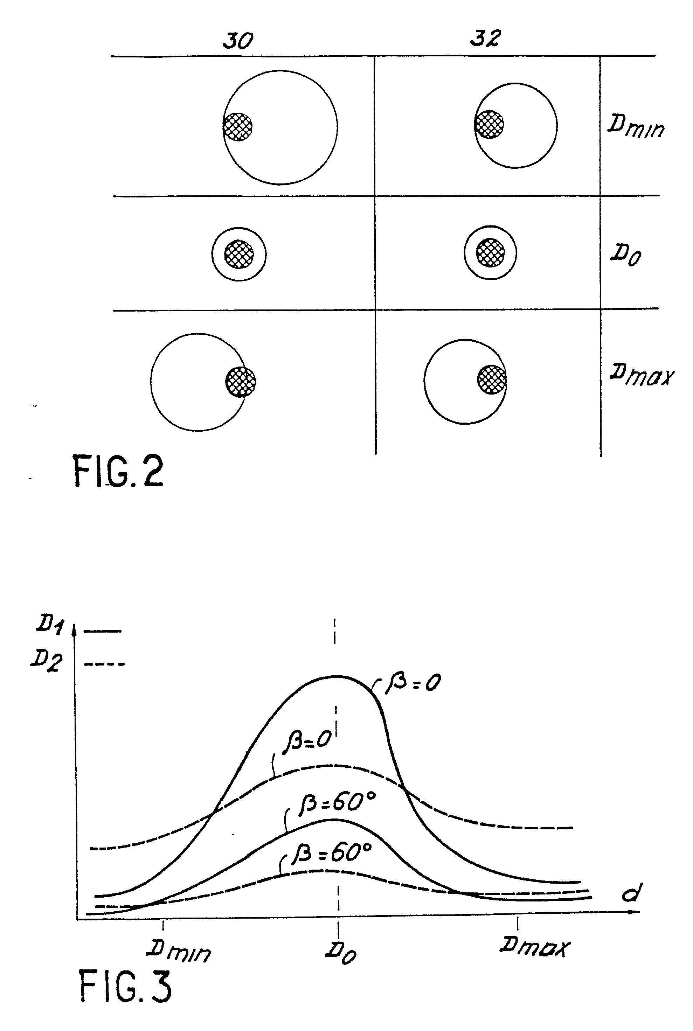

Sur la figure 2, on a représenté sous forme de tableau les positions des surfaces des taches de lumière formées au niveau de chacun des détecteurs 30 et 32 par rapport à la surface sensible $S_d$ de ces derniers, pour trois positions différentes de la surface S par rapport au dispositif.

De façon plus précise, la surface sensible constante $S_d$ de chacun des détecteurs 30 et 32 a été représentée par un petit cercle hachuré. Les surfaces des taches de lumière au niveau des détecteurs sont les surfaces délimitées par les grands cercles non hachurés.

Sur la figure 2, les positions relatives de ces deux surfaces sont représentées, pour chacun des détecteurs, dans les trois positions caractéristiques suivantes du dispositif de la figure 1:

– la distance d est égale à une distance mini- mum $D_{min}$ correspondant à la limite inférieure de portée du dispositif,

– la distance d est égale à la distance moyenne de référence $D_0$ pour laquelle le rayonnement émis par l'émetteur 14 est focalisé sur la surface de la pièce P, et

– la distance d est égale à une distance maxi- mum $D_{max}$ correspondant à la limite maximum de portée du capteur.

Comme l'illustre la figure 1, le domaine de mesure C est défini entre les valeurs $D_{min}$ et $D_{max}$ de la distance d, ces valeurs étant elles-mêmes définies de façon approximative et pratique, et non rigoureuse.

Si l'on étudie maintenant plus en détail la figure 2, on observe tout d'abord que, pour la distance de

référence $D_0$, les surfaces des taches de lumière au niveau des détecteurs 30 et 32 sont supérieures ou au moins égales aux surfaces sensibles des détecteurs.

De plus, on observe que si l'on s'éloigne de cette distance $D_0$ dans l'un ou l'autre sens, deux phénomènes se superposent:

– la variation de d par rapport à $D_0$ entraîne une défocalisation et, par conséquent, une augmentation des surfaces des taches lumineuses au niveau des détecteurs; si ce premier phénomène est considéré isolément, il a donc pour conséquence que le flux lumineux reçu par chaque détecteur va en diminuant lorsque la distance d s'éloigne dans l'un ou l'autre sens de la distance de référence $D_0$;

– la variation dans l'un ou l'autre sens de la distance d entraîne un déplacement du centre des taches lumineuses formées au niveau des détecteurs par rapport à la surface sensible $S_d$ de chacun d'entre eux; ce phénomène est dû au décalage angulaire $\alpha$ entre les axes optiques du faisceau incident et du faisceau renvoyé par la surface; s'il est considéré isolément, il entraîne également une diminution du flux lumineux reçu par chaque détecteur lorsqu'on s'éloigne de la distance de référence $D_0$; toutefois, cette diminution n'est sensible au voisinage immédiat de la distance $D_0$ qu'à la condition que les surfaces des taches lumineuses soient pratiquement identiques à celles des surfaces sensibles des détecteurs lorsque la distance d est égale à $D_0$.

Ces deux phénomènes se cumulent dans le mode de réalisation qui vient d'être décrit en se référant à la figure 1. Par conséquent, les réponses des deux détecteurs 30 et 32 varient en fonction de la distance d.

Toutefois, on conçoit aisément que l'invention n'est pas limitée à l'exploitation simultanée de ces deux phénomènes dans un même dispositif et concerne également des dispositifs comparables ne mettant en œuvre que l'un de ces phénomènes.

Ainsi, dans un mode de réalisation non représenté, le dispositif selon l'invention peut être réalisé de telle sorte que le faisceau incident et le faisceau renvoyé par la surface présentent des axes optiques confondus. Ce résultat peut être obtenu par exemple, à l'aide de lames semi-réfléchissantes en mettant en œuvre les techniques bien connues des opticiens. On remarquera cependant qu'un tel dispositif a pour inconvénient par rapport au dispositif de la figure 1 que les lames semi-réfléchissantes divisent par quatre le niveau d'énergie lumineuse utile par rapport au niveau du signal émis par la source et que des rayonnements parasites apparaissant par réflexion et par diffusion au niveau de la lame réfléchissant le faisceau incident vers la surface peuvent détériorer le rapport signal sur bruit. Dans ce dispositif, seul le premier phénomène cité précédemment entre en jeu.

Une analyse plus approfondie de ce premier phénomène fait apparaître qu'il se décompose lui-même en deux. En effet, dans l'ensemble optique décrit en se référant à la figure 1, toute variation dans l'un ou l'autre sens de la distance d par rapport à la distance $D_0$ a pour conséquence à la fois une défocalisation de la tache formée sur la surface par le faisceau incident et une défocalisation de l'image de cette tache par rapport aux détecteurs 30 et 32. Il est donc clair que l'effet de défocalisation par rapport aux détecteurs subsiste lorsque les dimensions de la tache formée par le faisceau émetteur ne varient pas avec la distance d, c'est-à-dire lorsque le faisceau incident est un faisceau parallèle.

Dans un autre mode de réalisation non représenté, le dispositif selon l'invention comporte donc un ensemble émetteur émettant un faisceau incident parallèle. Ce résultat peut être obtenu aisément par un opticien en utilisant une optique appropriée.

Bien entendu, ce mode de réalisation comporte également deux variantes. Selon une première de ces variantes, les faisceaux incident et renvoyé présentent des axes optiques confondus. Au contraire, selon la deuxième variante, les axes optiques des deux faisceaux sont angulairement décalés.

Sur la figure 3, on a représenté respectivement en traits continus et en traits discontinus les réponses du capteur 30 et du capteur 32 en fonction de la distance d, lorsque l'angle d'incidence $\beta$ du faisceau incident par rapport à la surface S est nul et lorsque cet angle est égal à 60°. Toutes ces courbes ont été établies pour une pièce P dont la surface présente un coefficient de réflexion $\eta$ de 0,7.

L'examen des courbes de la figure 3 fait apparaître que, si les réponses des capteurs sont bien fonction de la distance d, comme l'analyse de la figure 2 l'avait montré, elles dépendent également de l'angle d'incidence $\beta$. De plus, si l'on trace les courbes de réponse des détecteurs pour différentes valeurs du coefficient de réflexion $\eta$, on observe que les réponses des détecteurs sont également fonction de ce coefficient de réflexion. Une observation plus approfondie de ces courbes montre qu'elles sont homothétiques par rapport à l'axe des abscisses quels que soient le coefficient de réflexion $\eta$ et l'angle d'incidence $\beta$.

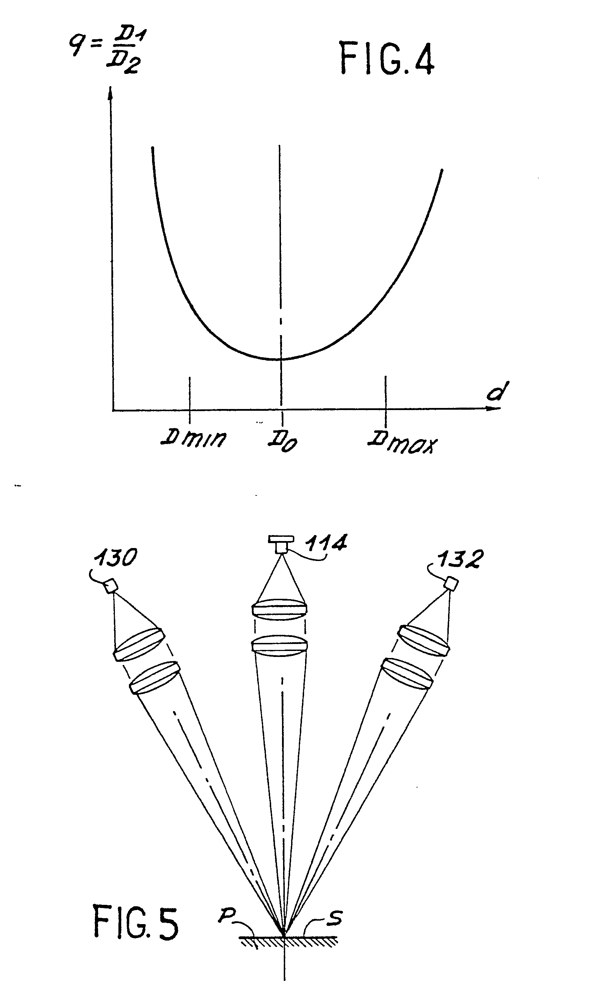

Par conséquent, la division des signaux $D_1$ et $D_2$ délivrés par les détecteurs 30 et 32 effectuée par le circuit de traitement électronique 40 fournit un signal $q = D_1/D_2$ qui est lié uniquement à la distance d, comme l'illustre la figure 4. La courbe $q = f(d)$ étant une fonction non linéaire, le signal q est linéarisé par le circuit 42 pour fournir un signal linéaire $V = k.d$ comme on l'a mentionné précédemment.

Le dispositif selon l'invention permet donc de réaliser une mesure sans contact de la distance d.

Bien entendu, bien que le filtre interférentiel 22 ainsi que les circuits de modulation 34 et de démodulation 36 et 38 permettent d'immuniser le dispositif au rayonnement ambiant, ils ne sont pas indispensables à l'invention et peuvent être supprimés dans certaines applications particulières dans lesquelles ce rayonnement est négligeable.

De même, le circuit d'asservissement 44 peut être supprimé dans un dispositif simplifié.

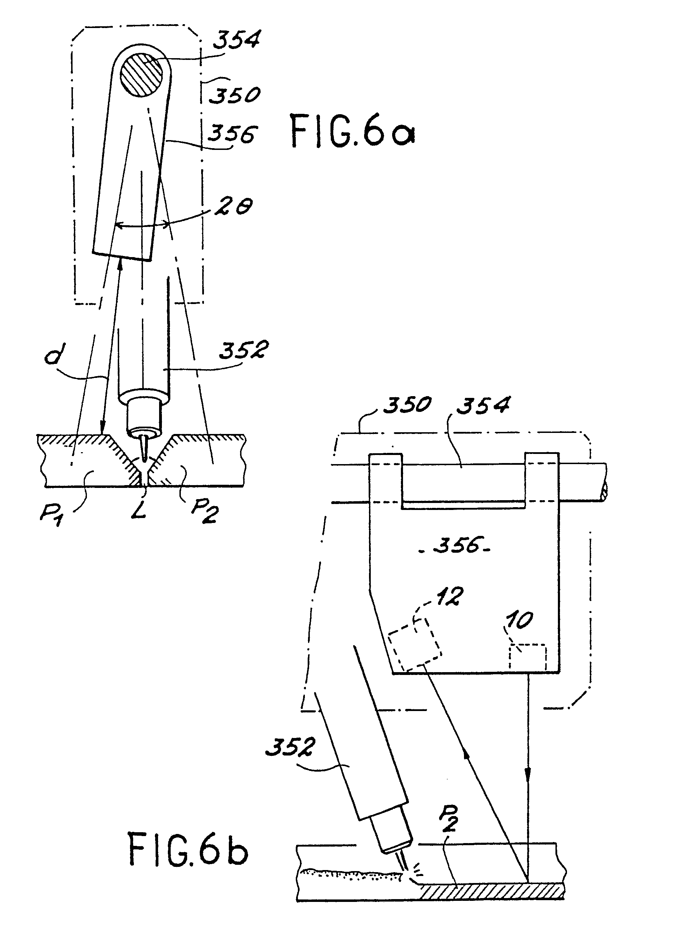

Sur la figure 5, on a représenté un autre mode de réalisation du dispositif selon l'invention.

Le mode de réalisation de la figure 5 se distingue essentiellement du mode de réalisation de la figure 1 par la disposition des détecteurs. Ainsi, dans le dispositif représenté sur la figure 5, les deux détecteurs 130 et 132 sont disposés symétriquement par rapport à l'axe optique du faisceau incident émis par l'émetteur 114. Pour simplifier, la partie électronique du dispositif, qui peut être identique à celle du mode de réalisation de la figure 1, n'a pas été représentée.

Dans cette configuration, les signaux délivrés par les détecteurs sont comparables à ceux qui sont délivrés par les détecteurs 30 et 32 dans le mode de réalisation de la figure 1, à condition que la normale à la surface S de la pièce P soit située dans un plan contenant l'axe optique de l'émetteur 114 et perpendiculaire au plan défini par les axes optiques de l'émetteur et des détecteurs.

Ce mode de réalisation présente l'avantage d'être sensible à l'état de surface de la pièce, au niveau de la tache lumineuse, et peut délivrer des informations sur la rugosité ou le coefficient de réflexion locale. Ces informations sont obtenues par traitement de la composante alternative du signal de mesure, la composante continue demeurant fonction de la distance.

Bien entendu, à l'exception de la lame semi-réfléchissante 24, tous les éléments optiques et électroniques qui ont été décrits en se référant au mode de réalisation de la figure 1 s'appliquent également à ce mode de réalisation.

Sur les figures 6a et 6b, on a représenté schématiquement et à titre d'exemple non limitatif une application particulièrement intéressante du dispositif selon l'invention au relevé du profil d'une surface, en association avec un robot de soudage. La référence 350 désigne la tête d'un robot de soudage supportant une torche de soudage 352.

Dans cette application de l'invention, la tête 350 comporte un axe 354 positionné au-dessus de la surface des pièces $P_1$ et $P_2$ à souder, de façon à être sensiblement parallèle à la ligne de joint L formée entre ces pièces, à la verticale de la torche de soudage 352.

Comme l'illustrent les figures 6a et 6b, l'axe 354 supporte de façon pivotante le boîtier 356 du dispositif de mesure de proximité selon l'invention.

Bien entendu, ce dispositif peut être réalisé conformément à l'un quelconque des modes de réalisation décrits précédemment. Sur les figures 6a et 6b on a représenté à titre d'exemple le cas où ce dispositif est celui qui a été décrit en se référant à la figure 1. On reconnaît en effet l'ensemble émetteur 10 et l'ensemble récepteur 12.

Le dispositif 356 est supporté par l'axe 354, de telle sorte que le faisceau incident vienne heurter les pièces $P_1$ et $P_2$ en avant de la torche de soudage 352, comme le montre la figure 6b.

Des moyens (non représentés) tels qu'un moteur électrique, hydraulique, pneumatique, etc. font osciller le dispositif 356 autour de l'axe 354, de telle sorte que les faisceaux incident et renvoyé balayent le profil de la zone de soudage légèrement en avant de la torche. Ce déplacement correspond à un angle $2\theta$ approximativement centré par rapport au plan vertical passant par la ligne de joint L. La tension V délivrée par le dispositif de mesure de proximité étant représentative de la distance d, son évolution au cours du déplacement selon l'angle $2\theta$ représente le profil des surfaces des pièces $P_1$ et $P_2$ de part et d'autre de la ligne L.

Dans une variante non représentée du dispositif illustré par les figures 6a et 6b, le balayage de la surface à l'aide du dispositif de mesure de proximité est réalisé par des moyens différents. Ces moyens comprennent des rails de guidage permettant un déplacement linéaire du boîtier transversalement au joint et des moyens tels qu'un moteur ou un vérin pour commander ce déplacement. On remplace ainsi un balayage angulaire par un balayage linéaire.

Dans une autre variante de réalisation non représentée, le balayage mécanique obtenu à l'aide du mécanisme représenté schématiquement sur les figures 6a et 6b est remplacé par un balayage optique utilisant des moyens connus de déflexion du faisceau lumineux. Un tel balayage optique permet d'atteindre des fréquences plus élevées qu'un balayage mécanique.

On comprend que les informations délivrées par un tel dispositif permettent, à l'aide d'un traitement informatique approprié, de corriger la trajectoire de la torche de soudage en cours de soudage, d'asservir en cours de soudage les paramètres tels que la quantité de matière à apporter lors d'une passe, de relever la section à remplir, ou encore de positionner les passes de soudage les unes par rapport aux autres lors d'un soudage multipasses.

Bien entendu, cette application n'est pas limitative. Ainsi, on peut aussi envisager d'utiliser le dispositif de mesure de proximité selon l'invention pour réaliser le contrôle dimensionnel d'une pièce en cours de fabrication. Dès que la distance sort d'un intervalle de tolérance défini à l'avance, le dispositif selon l'invention le détecte. Un rejet automatique des pièces défectueuses peut donc être effectué.

**Revendications**

1. Dispositif optique de mesure de proximité de surface, comprenant un émetteur de rayonnement (14, 114) formant une tache lumineuse sur ladite surface (S) et un récepteur (12) sensible au flux lumineux renvoyé par cette dernière, au travers de moyens de focalisation (20, 22, 26, 28), le récepteur (12) comprenant deux détecteurs (30, 32, 130, 132) et des moyens (40) pour déterminer la valeur du rapport (q) entre les flux lumineux ($D_1$, $D_2$) mesurés par chacun des récepteurs, cette valeur étant représentative de la distance (d) séparant le dispositif de la surface, caractérisé en ce que les deux détecteurs sont associés à deux moyens de focalisation (26, 28) présentant des focales différentes.

2. Dispositif selon la revendication 1, caractérisé en ce que la tache lumineuse est formée sur ladite surface (S) par un faisceau incident parallèle.

3. Dispositif selon la revendication 1, caractérisé en ce que la tache lumineuse est formée sur ladite surface (S) par un faisceau incident convergent.

4. Dispositif selon l'une quelconque des revendications 1 à 3, caractérisé en ce que la tache lumineuse est formée sur ladite surface (S) par un faisceau incident angulairement décalé par rapport au faisceau renvoyé par ladite surface.

5. Dispositif selon l'une quelconque des revendications précédentes, caractérisé en ce qu'il comprend de plus des moyens d'asservissement (44) de l'intensité du rayonnement émis par l'émetteur (14) en fonction du flux lumineux mesuré par l'un (32) des détecteurs, afin que ce flux reste constant.

6. Dispositif selon l'une quelconque des revendications précédentes, caractérisé en ce qu'il comprend de plus au moins un filtre (22) associé aux détecteurs (30, 32) et centré sur la longueur d'onde du rayonnement émis par ledit émetteur (14, 114).

7. Dispositif selon l'une quelconque des revendications précédentes, caractérisé en ce qu'il comprend de plus des moyens (34) pour moduler à une fréquence donnée le rayonnement émis par l'émetteur (14) et des moyens (36, 38) pour démoduler à ladite fréquence les signaux délivrés par chacun des détecteurs (30, 32).

8. Dispositif selon l'une quelconque des revendications précédentes, caractérisé en ce qu'il comprend de plus une lame semi-transparente (24) placée entre ladite surface (S) et l'un (30) des détecteurs pour dévier une partie du flux lumineux vers l'autre détecteur (32).

9. Dispositif selon l'une quelconque des revendications 1 à 7, caractérisé en ce que les deux détecteurs (130, 132) sont disposés symétriquement par rapport à l'axe optique de l'émetteur (114), la normale à la surface (S) étant située dans un plan passant par l'axe optique de l'émetteur et perpendiculaire au plan défini par les axes optiques de l'émetteur et des détecteurs.

10. Dispositif optique de relevé du profil d'une surface, caractérisé en ce qu'il comprend un dispositif de mesure de proximité selon l'une quelconque des revendications précédentes et des moyens (354) pour faire balayer le profil par ce dispositif de mesure de proximité.

## Claims

1. Optical surface proximity measuring device comprising a radiation emitter (14, 114) forming a light spot on said surface (S) and a receiver (12) which is sensitive to the light flux reflected by the latter across focusing means (20, 22, 26, 28), the receiver comprising two detectors (30, 32, 130, 132) as well as means (40) for determining the value of the relationship (q) between the light fluxes ($D_1$, $D_2$) measured by each of the receivers, said value representing the distance (d) separating the device from the surface, characterized in that said two detectors are associated with two focusing means (26, 28) having different focal lengths.

2. Device according to claim 1, characterized in that the light spot is formed on the said surface (S) by a parallel incident beam.

3. Device according to claim 1, characterized in that the light spot is formed on said surface (S) by a convergent incident beam.

4. Device according to any one of the claims 1 to 3, characterized in that the light spot is formed on said surface (S) by an incident beam angularly displaced with respect to the beam reflected by said surface.

5. Device according to any one of the preceding claims, characterized in that it also comprises control means (44) for the intensity of the radiation emitted by the emitter (14), as a function of the light flux measured by one (32) of the detectors, in order that said flux remains constant.

6. Device according to any one of the preceding claims, characterized in that it also comprises at least one filter (22) associated with detectors (30, 32) and centered on the wavelength of the radiation emitted by said emitter (14, 114).

7. Device according to any one of the preceding claims, characterized in that it also comprises means (34) for modulating the radiation emitted by the emitter (14) to a given frequency and means (36, 38) for demodulating the signal supplied by each of the said detectors (30, 32) at said frequency.

8. Device according to any one of the preceding claims, characterized in that it also comprises a semitransparent plate (24) positioned between said surface (S) and one (30) of the detectors, in order to deflect part of the light flux towards the other detector (32).

9. Device according to any one of the claims 1 to 7, characterized in that the two detectors (130, 132) are arranged symmetrically with respect to the optical axis of the emitter (114), the normal to the surface (S) being located in a plane passing through the optical axis of the emitter and perpendicular to the plane defined by the optical axes of the emitter and the detectors.

10. Optical device for plotting the profile of a surface, characterized in that it comprises a surface proximity measuring device according to any one of the preceding claims and means (354) for scanning the profile by said proximity measuring device.

## Patentansprüche

1. Optische Vorrichtung zum Messen der Annäherung an eine Fläche, enthaltend einen Strahlensender (14, 114), der einen Lichtfleck auf der genannten Oberfläche (S) bildet, und einen Empfänger (12), der auf den Lichtfluß empfindlich ist, der von letzterer durch Fokussiereinrichtungen (20, 22, 26, 28) rückgestrahlt wird, welcher Empfänger (12) zwei Detektoren (30, 32, 130, 132) und Einrichtungen (40) enthält, um den Verhältniswert (q) zwischen den Lichtflüssen ($D_1$, $D_2$), die von

jedem der Empfänger gemessen werden, zu bestimmen, wobei dieser Wert für die Distanz (d) repräsentativ ist, die die Vorrichtung von der Oberfläche trennt, dadurch gekennzeichnet, daß die zwei Detektoren zwei Fokussierungseinrichtungen (26, 28) zugeordnet sind, die unterschiedliche Brennweiten aufweisen.

2. Vorrichtung nach Anspruch 1, dadurch gekennzeichnet, daß der Lichtfleck auf der genannten Oberfläche (S) durch ein parallel einfallendes Lichtbündel erzeugt wird.

3. Vorrichtung nach Anspruch 1, dadurch gekennzeichnet, daß der Lichtfleck auf der genannten Oberfläche (S) durch ein konvergent einfallendes Lichtbündel gebildet wird.

4. Vorrichtung nach einem der Ansprüche 1 bis 3, dadurch gekennzeichnet, daß der Lichtfleck auf der genannten Oberfläche (S) durch ein Lichtbündel erzeugt wird, das winkelmäßig gegenüber dem Lichtbündel versetzt ist, das von der genannten Oberfläche rückgestrahlt wird.

5. Vorrichtung nach einem der vorhergehenden Ansprüche, dadurch gekennzeichnet, daß sie darüber hinaus Steuereinrichtungen (44) für die von dem Sender (14) abgegebene Strahlungsintensität in Abhängigkeit vom Lichtfluß, der von einem (32) der Detektoren gemessen wird, aufweist, damit dieser Fluß konstant bleibt.

6. Vorrichtung nach einem der vorhergehenden Ansprüche, dadurch gekennzeichnet, daß sie darüber hinaus wenigstens ein Filter (22) aufweist, das den Detektoren (30, 32) zugeordnet und auf die Wellenlänge der von dem genannten Sender (14, 114) abgegebenen Strahlung zentriert ist.

7. Vorrichtung nach einem der vorhergehenden Ansprüche, dadurch gekennzeichnet, daß sie darüber hinaus Einrichtungen (34) aufweist, um die von dem Sender (14) abgegebene Strahlung mit einer gegebenen Frequenz zu modulieren, und Einrichtungen (36, 38) aufweist, um die genannte Frequenz aus den Signalen zu demodulieren, die von jedem der Detektoren (30, 32) geliefert werden.

8. Vorrichtung nach einem der vorhergehenden Ansprüche, dadurch gekennzeichnet, daß sie darüber hinaus eine halbtransparente Platte (24) aufweist, die zwischen der genannten Oberfläche (S) und einem (30) der Detektoren angeordnet ist, um einen Teil des Lichtflusses gegen den anderen Detektor (32) abzulenken.

9. Vorrichtung nach einem der Ansprüche 1 bis 7, dadurch gekennzeichnet, daß die zwei Detektoren (130, 132) symmetrisch in bezug auf die optische Achse des Senders (114) angeordnet sind, wobei die Senkrechte auf die genannte Oberfläche (S) in einer Ebene liegt, die durch die optische Achse des Senders und senkrecht zu der Ebene verläuft, die durch die optischen Achsen des Senders und der Detektoren bestimmt ist.

10. Optische Vorrichtung zur Erfassung des Profils einer Oberfläche, dadurch gekennzeichnet, daß sie eine Annäherungsmeßvorrichtung nach einem der vorhergehenden Ansprüche und Einrichtungen (354) zum Abtasten des Profils durch diese Annäherungsmeßvorrichtung aufweist.

FIG.1

FIG.2

FIG.3

$$q = \frac{D1}{D_2}$$

FIG.4

Dmin          D₀          Dmax

d

130          114          132

FIG.5          P          S

13

FIG.6a

FIG.6b

15